# EUROPEAN PATENT APPLICATION

(11) **EP 2 407 293 A2**
(43) Date of publication of application: **18.01.2012**
(21) Application number: 10713346.4
(22) Date of filing: 10.03.2010
(51) Int. Cl.: B29C 33/44

(54) **CLOSED STRUCTURE CONSISTING OF A COMPOSITE MATERIAL**

(30) Priority: 10.03.2009 ES 200900667
(71) Applicant: Airbus Operations, S.L., 28906 Getafe Madrid (ES)
(72) Inventor: DÍAZ-CANEJA FERNÁNDEZ, Carlos, Madrid (ES)
(74) Representative: Elzaburu Marquez, Alberto
(86) International application number: PCT/ES2010/070138
(87) International publication number: WO 2010/103156

(57) **Abstract**

The invention relates to a tubular-shaped closed structure (11) of composite material comprising a skin (21) and a plurality of omega-shaped reinforcing longitudinal stringers (23), such as a structure of an aircraft fuselage, manufactured as a single piece on a male jig (13) of a material with a coefficient of contraction greater than that of the composite material and demolded according to a predetermined direction, in which: a) the outer surface (31) of the skin (21) forms an angle ≥ 0° with the demolding direction (35); b) each of said longitudinal stringers (23) is shaped with a trace (41) following a demoldable direction and with a cross section maintaining its height (Ho), the length of its head (Lho) and the length between its legs (Lfo) constant throughout the trace (41).

## Description

### Field of the Invention

The present invention relates to a closed structure manufactured from a composite material as a single piece, such as a section of an aircraft fuselage, the reinforcing stringers of which have an omega-shaped cross section.

### Background of the Invention

Patent application WO 2008/092971 describes a closed structure of composite material for an aircraft fuselage shaped on a male jig from which it can be separated in a determined direction. The structure is formed by a one-piece skin and a plurality of omega-shaped inner longitudinal stiffeners integrated in said panel and is consolidated in an autoclave. The male jig includes housings for positioning the uncured longitudinal stringers on which the skin is taped and is made of aluminum, a material which has a coefficient of contraction greater than that of the composite material, therefore when the structure cools after coming out of the autoclave, a clearance is created between the structure and the jig which allows demolding the structure according to a predetermined demolding direction (close to the X axis of the aircraft).

The design of the longitudinal stringers must be done such that different requirements, and particularly demoldability, structural resistance and manufacturability requirements are all compatible.

In the case of large fuselage components, even though their outer shape is generally similar to that of a tubular or conical surface of revolution, there are local areas where this is not the case for different reasons. On one hand, the thickness of the skin is not constant since the stresses to which the fuselage is subjected vary greatly from one area to another and this means, among others, that the legs of the longitudinal stringers are supported on the skin at different heights. These circumstances make it difficult for the design of the omega-shaped section of the longitudinal stringers to be done simultaneously meeting the mentioned requirements.

The present invention aims to solve this drawback.

### Summary of the Invention

An object of the present invention is to provide a closed structure made of composite material and internally provided with reinforcing stringers with an omega-shaped cross section, such as a section of an aircraft fuselage manufactured as a single piece, in which said stringers are shaped such that a suitable balance between the demoldability, structural resistance and manufacturability requirements is achieved.

Another object of the present invention is to provide a closed structure made of composite material and internally provided with reinforcing stringers with an omega-shaped cross section, such as a section of an aircraft fuselage manufactured as a single piece, in which the design of the stringers facilitates their modeling to facilitate their detailed analysis.

These and other objects are achieved providing a closed structure with the mentioned features which is manufactured as a single piece on a male jig made of a material with a coefficient of contraction greater than that of the composite material, the outer surface of which forms an angle greater than or equal to 0° with the demolding direction and in which each of said longitudinal stringers is shaped with a trace following a demoldable direction in relation to the demolding direction and with a cross section maintaining its height (Ho), the length of its head (Lho) and the length between its legs (Lfo) constant throughout the trace.

In a preferred embodiment, said cross section fulfills two conditions in relation to a reference surface perpendicular to the outer surface of the skin throughout the trace: the vertexes of the legs are located in the intersection of the inner surface of the skin with surfaces parallel to said reference surface at a predetermined distance (Lfo/2) from it; the head is delimited by surfaces parallel to said reference surface at a predetermined distance (Lho/2) from it, is parallel to a hypothetical surface between the vertexes of the legs and is located at a predetermined distance (Ho) from it. A shaping of stringers which can be easily modeled is thus achieved.

In another preferred embodiment, the closed structure forms part of an aircraft fuselage. It thereby allows manufacturing one-piece sections of aircraft fuselages with the subsequent advantages in terms of costs, completion deadlines and a lower weight of the component.

Other features and advantages of the present invention will become evident from the following detailed description of the illustrative embodiments of its object, together with the attached drawings.

### Description of the Drawings

Figure 1 shows a component of an aircraft fuselage with a one-piece skin reinforced by omega-shaped longitudinal stringers made of composite material which is being separated from the jig used to shape it.
Figure 2 shows a cross section of a detail of an area of the skin of the component of an aircraft fuselage in which the thickness changes.
Figure 3 shows the geometry of a longitudinal reinforcing stringer of the skin of the component of an aircraft fuselage according to the present invention.
Figure 4 shows the cross section of a longitudinal reinforcing stringer of the skin of the component of an aircraft fuselage according to the present invention.

### Detailed Description of the Invention

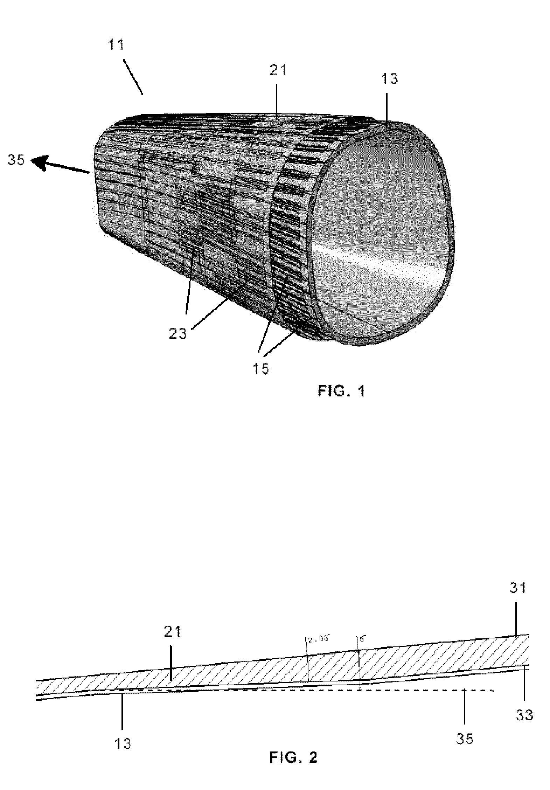

The invention is described below relating to a component 11 of an aircraft fuselage made of composite material as a single piece. Figure 1 shows this component 11 at a time during the process of demolding from the jig 13 according to the demolding direction 35.

The component 11, which is generally frustoconical or tubular shaped, is formed by a skin 21 and a plurality of omega-shaped longitudinal stringers 23 therein and the jig 13 includes slots 15 with a shape similar to that of said longitudinal stringers 23.

The process for manufacturing the component 11 with a composite material such as a CFC (Carbon Fibre Composite) basically comprises a first step in which the omega-shaped longitudinal stiffeners 23 are arranged in said slots 15 in a "uncured" state, a second step in which the composite material is laminated on said jig to shape the skin 21, a third step in which the component 11 is consolidated in an autoclave and a fourth step in which the component 11 is demolded, separating it from the jig 13.

In order to demold the component 11 it is first necessary to ensure that the outer surface of its skin 21 is demolded, and this means that this surface must form an angle ≥ 0° with respect to the demolding direction at each point. However, if the demolding of the inner surface of the skin 21 is considered, it must be taken into account that this inner surface is generated entirely from surfaces parallel to the outer surface which will be demoldable provided that the outer surface is demoldable. However, the inner surface is also generated by surfaces of transition between the different changes of the thickness of the skin 21 generating plateaus or valleys which a priori gives rise to the surfaces of transition not being demoldable.

As is illustrated in Figure 2, if in one section of skin 21, arranged with a certain clearance on the jig 13, there are different thicknesses between the outer surface 31 and the inner surface 33, and it is assumed that the surfaces of transition are generated with a fabric drape ratio of 1/20, which corresponds with a drape angle of 2.86°, it is necessary to ensure that the angle formed by the demolding direction 35 with the outer surface 31 in which there are excessive thicknesses is greater than 2.86° if these slopes are to be demolded without considering the relative contraction of the aluminum jig 13 in relation to the skin 21.

In order to demold the component 11 it is necessary to ensure secondly that the longitudinal stringers 23 are demolded, which means considering both the trace 41 marking their position on the skin 21 and their cross section.

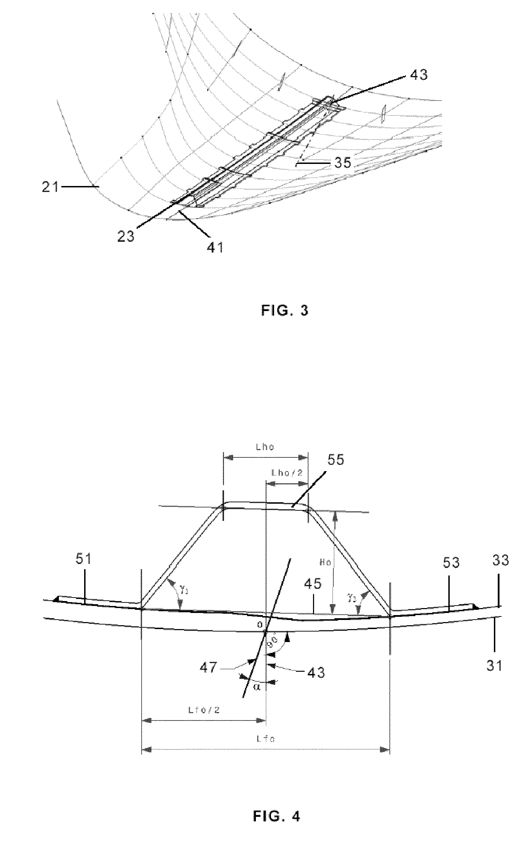

According to Figure 3, it can be observed that the trace 41 marking the position of the longitudinal stringer 23 on the outer surface of the skin 21 is generated by means of a plane 43 which must be demoldable, to which end it must contain the demolding direction 35, or in other words, it must be generated by means of a straight line 35 the direction of which is the demolding direction. Therefore, if the intersection between these planes and the outer surface of the skin is generated, outlines are obtained on the surface following demoldable directions. There will be as many planes 43 as stringers 23 and each of these planes will be passed through two points, one at the beginning of the section and the other at the end, for the purpose of optimizing the position thereof, considering structural criteria.

In relation to the omega-shaped cross section of the stringers 23, several criteria must be taken into account: demoldability, structural resistance and other manufacturability and industrialization factors.

If the component 11 had a perfectly conical cylindrical shape 6, the manufacturability and industrialization of said stringers would be largely simplified. However, as this does not occur in aircraft fuselages it is necessary to take into account all the mentioned criteria and to accept certain restrictions in their application.

An important factor to be taken into account in the present invention is the relative contraction of the aluminum jig 13 in relation to the CFC (Carbon Fiber Composite) skin 21. As is known, the relative contraction of the jig 11 compared to the skin 21 + longitudinal stringer 23 assembly when it comes out of the autoclave is due to the fact that the carbon fiber cures at a temperature of 180°C and during the cooling of the jig 13 - skin 21 assembly, it is found that given that the difference between the coefficient of contraction of aluminum and CFC is of the order of 3/1000, a radial clearance along the entire surface between the jig 13 and the skin 21 occurs at the time of demolding that is fundamental for demolding the component 11. The different contraction of the jig 13 in particular compared to the component 11 is essential for being able to demold the legs of the stringers 23 which, due to scalloping, are not demoldable per se, and also to aid in demolding the stringers 23 with the cross section described below (which would not be demoldable if the mentioned clearance did not exist).

The definition of the omega-shaped cross section of the stringers 23 according to the present definition is first carried out in relation to their inner surface and starting from the basic parameters of their geometry assuring their resistant performance. After that, the outer surface is defined by means of parallels to the inner surface initially obtained, thus defining the thicknesses needed and these outer surfaces are attached by means of the corresponding curved areas of transition.

The process for obtaining the inner surface of the omega-shaped cross section of the stringers 23 depicted in Figure 4 consists of the following steps:
a) The trace 41 is generated on the outer surface of the skin 21 as previously mentioned.
b) From the trace 41, a reference surface 43 containing said trace 41 and which is perpendicular at all times to the outer surface 31 of the skin 21 is generated.
c) The legs 51, 53 and the head 55 of the omega are delimited by means of parallels to the reference surface 43. The parallels limiting the dimension of the head 55 are generated at a distance Lho/2 that is half the predetermined length Lho of the head 55, whereas the distance at which the surfaces generating the legs 51, 53 must be located is the distance Lfo/2 that is half the predetermined length Lfo between legs. The head 55 of the omega is generated as a parallel at a predetermined distance Ho of a surface 45 generated from the inner surface 33 of the skin 21 between the vertexes of the legs 51, 53. The angles of opening of the omega γ1, γ2 (which in Figure 4 have a magnitude of about 50°) can thus vary throughout the trace and have a different magnitude in each section. Thus, for example, in the section depicted in Figure 4, γ1 is somewhat greater than γ2.

Obviously, the geometric parameters Lho, Lfo and Ho used in the definition of the cross section, as well as the thickness of the omega are defined by resistance considerations.

Due to the fact that the reference surface 43 is not demoldable by definition, the section of the omega will not be demoldable; but due to the fact that the deviations of this surface 43 with respect to the plane 47 of the stringer 23 which is defined as demoldable, and which are represented by angle α in Figure 4, are locally small, the surface of the omega can be demolded as a result of the aforementioned clearance and the conicity of the geometries of the actual omega and of the component 11: when the omega comes out of the jig 13 according to a longitudinal direction, it also gradually detaches from the jig 13 due to the conicity of the component 11.

The following can be mentioned as among the relevant features of the cross section of the stringers 23 that have been described:
- It is defined at all times.
- It can be easily modeled by means of jigs provided by CAD systems.
- It can be modeled without having the inner surface 33 of the skin 21 defined, and when it is defined, the final sections of the omegas can be obtained by means of the jigs provided by CAD systems.
- Its section and inner area change very little throughout the trace 41 of the stringer, which are essential features for facilitating the manufacture.

It must finally be mentioned that since a stringer 23 with an omega-shaped cross section defined as it is described is not demoldable by definition, it is necessary to perform a series of kinematic analyses between the skin 21 and the jig 13 in conditions that are as similar as possible to the final conditions using CAD systems. In this sense, it is important to take into account that small variations in the outer surface of the airplane or in the position of the stringers 23 can make a region that was demoldable no longer be demoldable, such that every time any change of this type is introduced in the section, no matter how small it is, it is advisable to redo the demolding studies in order to continue assuring demoldability.

These studies allow detecting possible local demoldability problems which can be solved by means of isolated modifications of the design of the stringer.

Any modifications comprised in the scope of the following claims can be introduced in the preferred embodiment that has just been described.

## Claims

1. A tubular-shaped closed structure (11) made with a composite material comprising a skin (21) and a plurality of omega-shaped longitudinal reinforcing stringers (23), manufactured as a single piece on a male jig (13) of a material with a coefficient of contraction greater than that of the composite material and demolded according to a predetermined direction, **characterized in that**:
a) the outer surface (31) of the skin (21) forms an angle ≥ 0° with the demolding direction (35);
b) each of said longitudinal stringers (23) is shaped with a trace (41) following a demoldable direction in relation to the demolding direction (35) and with a cross section maintaining (41) its height (Ho), the length of its head (Lho) and the length between its legs (Lfo) constant throughout the trace.

2. The tubular-shaped closed structure (11) according to claim 1, **characterized in that** said cross section fulfills the following conditions in relation to a reference surface (43) perpendicular to the outer surface (31) of the skin (21) throughout the trace (41):
- b1) the vertexes of the legs (51, 53) are located in the intersection of the inner surface (33) of the skin (11) with surfaces parallel to said reference surface (43) at a predetermined distance (Lfo/2) from it;
- b2) the head (55) is delimited by surfaces parallel to said reference surface (43) at a predetermined distance (Lho/2) from it, it is parallel to a hypothetical surface (45) between the vertexes of the legs (51, 53) and it is located at a predetermined distance (Ho) from it.

3. The tubular-shaped closed structure (11) according to any of claims 1-2, **characterized in that** it is tubular or frustoconical shaped.

4. The tubular-shaped closed structure (11) according to any of claims 1-3, **characterized in that** it is a structure which forms part of an aircraft fuselage.
